Europäisches Patentamt
European Patent Office
Office européen des brevets

(19) (11) Publication number: **0 140 688 A2**

(12)

# EUROPEAN PATENT APPLICATION

(21) Application number: 84307399.0

(22) Date of filing: 26.10.84

(51) Int. Cl.⁴: **C 09 B 3/18**, C 09 B 69/00, C 09 B 67/22, C 09 C 3/12

(30) Priority: 28.10.83 IT 2350183

(43) Date of publication of application: 08.05.85 Bulletin 85/19

(84) Designated Contracting States: BE DE FR GB NL

(71) Applicant: Montedison S.p.A., 31, Foro Buonaparte, I-20121 Milan (IT)

(72) Inventor: Marraccini, Antonio, 4, corso Riviera Dormelletto, Novara (IT)
Inventor: Carlini, Filippo Maria, 7, corso Torino, Novara (IT)
Inventor: Bottaccio, Giorgio, 16, via Manin, Novara (IT)
Inventor: Pasquale, Antonio, 8, corso Milano, Novara (IT)
Inventor: Maranzana, Giorgio, 51, Strada Fara, Novara (IT)

(74) Representative: Whalley, Kevin et al, Marks & Clerk 57/60 Lincoln's Inn Fields, London WC2A 3LS (GB)

## (54) Silane perylene dyes, composite pigments obtainable therefrom, and processes for preparing the same.

(57) There are described silane diimidic tetracarboxylic perylene dyes, composite pigments obtainable therefrom by grafting onto an inorganic substrate or support, and processes for preparing the same.

The dyes have the general formula:

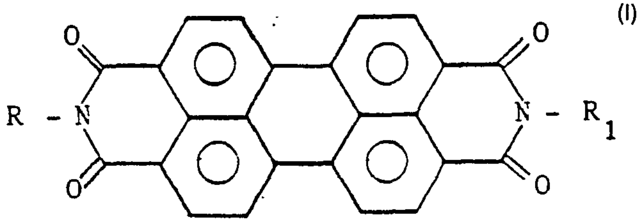

(I)

in which R is the residue of a silane group of formula:

$$-(CH_2)_n-\underset{(R_2)_q}{\underset{|}{Si}}-(R_3)_m(OH)_{p-m} \qquad (II)$$

wherein n is 3, 4 or 5; q is 0 or 1; p and m are integers such that when q is 0, p is 3 and m is 0, 1, 2 or 3, and when q is 1, p is 2 and m is 0, 1 or 2; $R_2$ is an alkyl $C_1$-$C_4$ group or a phenyl group; and $R_3$ is an alkoxyl $C_1$-$C_2$ group; and in which $R_1$ may be the same as R or may be an alkyl $C_1$-$C_8$ group, a cycloalkyl group, or a phenyl group optionally substituted by one or more halogens or alkyl or alkoxyl $C_1$-$C_6$ groups.

The dyes and the composite pigments obtained from said dyes are utilized in paints, air and stove enamels, in the pigmentation of plastics materials and in printing links.

EP 0 140 688 A2

"SILANE PERYLENE DYES, COMPOSITE PIGMENTS OBTAINABLE THEREFROM, AND PROCESSES FOR PREPARING THE SAME"

This invention relates to diimidic tetracarboxylic perylene dyes, briefly referred to as "perylene" dyes, containing, chemically combined therewith, at least one silane group, to the corresponding composite pigments obtainable therefrom by association with an inorganic solid substrate or support, and to processes for preparing such silane perylene dyes and corresponding composite pigments.

Whenever used in the following description, the term "silane composite pigment" means a pigmentary material comprising a perylene dye containing at least one silane group, associated with an inorganic solid substrate or support.

The association of the perylene dye containing at least one silane group, or, briefly, silane perylene dye, with the solid substrate or support imparts to the silane perylene dye the pigmentary characteristics which are typical of the inorganic pigments.

Such association is obtained through the formation

of chemical bonds (grafting) between the silane portion of the dye and the inorganic substrate or support.

An aim of the present invention is to provide silane perylene dyes useful for preparing pigments having excellent characteristics, in particular being highly hiding or fully transparent, and exhibiting excellent stabilities to solvents.

Further aims of the invention are the preparation of the abovesaid dyes and pigments by simple and economic methods.

The present invention in one aspect provides perylene dyes containing at least one silane group of formula:

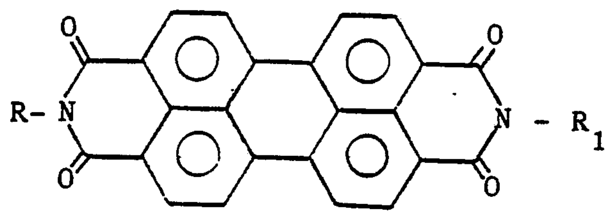

(I)

in which R is the residue of a silane group of formula:

$$-(CH_2)_n-\underset{\underset{(R_2)_q}{|}}{Si}-(R_3)_m(OH)_{p-m} \qquad (II)$$

wherein n is 3, 4 or 5; q is 0 or 1; p and m are integers such that, when q is 0, p is 3 and m is 0, 1, 2

or 3, and when q is 1, p is 2 and m is 0, 1 or 2; $R_2$ is an alkyl group having up to 4 carbon atoms or a phenyl group; and $R_3$ is an alkoxyl group having up to 2 carbon atoms; and in which $R_1$ may be the same as or like R or may be an alkyl group having up to 6 carbon atoms, a cycloalkyl group, or a phenyl group optionally substituted by one or more halogens or alkyl groups or alkoxyl groups containing up to 6 carbon atoms.

Such compounds according to the invention may be prepared, according to another aspect of the invention, by a process comprising reacting a 3,4,9,10-perylenetetracarboxylic dianhydride of formula:

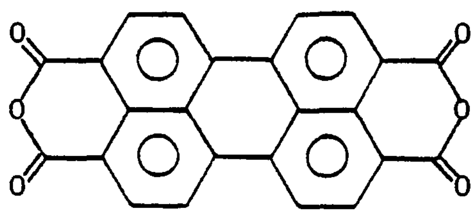

(III)

with a silane compound of formula:

$$H_2N-(CH_2)_n-\underset{(R_2)_q}{\overset{|}{Si}}-(R_3)_m(OH)_{p-m} \qquad (IV)$$

in which $R_2$, $R_3$, n, q, p and m are as defined above, and optionally with a compound of formula:

$$R_4-NH_2 \qquad (V)$$

wherein $R_4$ is an alkyl group having up to 6 carbon atoms, a cycloalkyl group or a phenyl group optionally substituted by one or more halogens or alkyl or alkoxy groups, in a reaction medium comprising water and/or an organic solvent, at a temperature from 130° to 240°C, for 6-24 hours. When it is desired to obtain a dye containing two silane groups, there is used a silane compound (IV): dianhydride (III) molar ratio of at least 2. When it is desired to obtain a dye containing only one silane group, there is used at least one mole of silane compound (IV) and at least one mole of amine (V) for each mole of dianhydride (III).

The reaction may be optionally carried out in the presence of a Zn salt, e.g. zinc chloride or zinc acetate, in an amount of from 1 to 50% by weight referred to the dianhydride employed.

It is possible to operate in aqueous suspension, in mixtures of water and organic solvents miscible with water, or in organic solvents.

As water-miscible organic solvents there may be utilized, for example, dioxane, dimethylformamide, and pyridine, and as water-immiscible solvents there may be utilized, for example, quinoline, trichlorobenzene, alpha-chloronaphthalene and nitrobenzene.

When using water or mixtures of water and organic solvents, the reaction is preferably conducted in a closed reactor, under an autogenous pressure, utilizing the compound of formula (V) in the form of hydrochloride. The product obtained from the reaction is usually hot washed with alkaline, acid and neutral water, then with methanol and finally dried at ambient temperature.

The perylene tetracarboxylic 3,4,9,10-dianhydride (III) is a known and commercially available product.

As silane compounds of formula (IV), those derived from amino-alkoxy-silanes, such as, for example, γ-amino-propyl-triethoxysilane, δ-amino-butyl-triethoxysilane, δ-aminobutyl-phenyl-diethoxysilane, and γ-aminopropyl-methyl-diethoxysilane have proved to be particularly suitable. Such amino-alkoxy-silanes are known compounds which are commercially available. However, they are preparable, according to conventional techniques, for example by reacting the corresponding chloro-alkoxy-silanes with aliphatic amines.

As amines of formula (V) there may be utilized, for example, linear aliphatic amines such as methylamine, ethylamine, propylamine, butylamine, pentylamine, and

hexylamine, corresponding ramified amines such as sec.butylamine, ter.butylamine and isopropylamine, cycloalkylamines such as cyclohexylamine and morpholine, aromatic amines such as aniline, ortho-, meta- or paratoluidines, anisidines or chloroanilines, 2,4- or 3,5-xylidines, dianisidines or dichloroanilines, 2-methyl-4-chloroaniline, 2,5-dimethoxy-4-chloroaniline, and 2,4-dimethoxy-5-chloroaniline.

The silane perylene dyes of formula (I) possess in themselves good pigmentary characteristics, such as stability to solvents, and in applications in stove alkyd enamels or in the pigmentation of plastics materials they provide products having a high tinting strength, good general stabilities and pure shades.

The silane perylene dyes of formula (I), since they contain in their molecules silanol groups and/or alkoxyl groups hydrolyzable to silanol groups $-Si(OH)_3$, are capable of both self-condensing, by reaction between the abovesaid silanol groups, and chemically reacting with the surface hydroxyl groups of suitable inorganic substrates or supports, which condense with those of the dyes, with formation of stable chemical bonds (grafting) between the dye and the substrate, giving rise to a composite product having excellent pigmentary characteristics.

The abovesaid dyes are therefore most preferably used for preparing composite pigments, according to a further aspect of the present invention, comprising silane perylene dyes of formula (I) grafted on an inorganic substrate or support.

Particularly suitable for being utilized in the preparation of composite pigments are the silane dyes of formula:

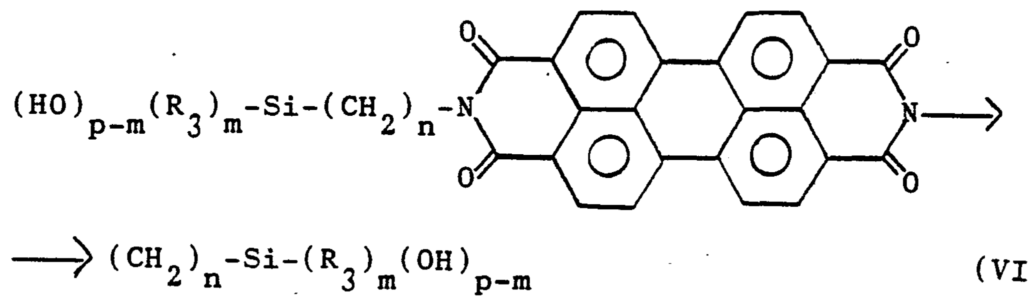

(VI)

wherein n, m, p and $R_3$ are as defined above, as well as the silane dyes of formula:

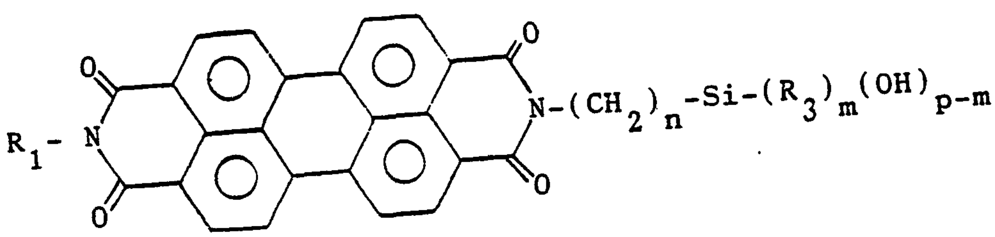

(VII)

wherein $R_1$, different from R, n, m, p and $R_3$ are as defined above.

Inorganic substrates or supports which are particularly suitable to obtain the pigmentary nature of

the silane perylene dyes of formula (I) are the following: $TiO_2$, in its gel, semicrystalline, rutile or anatase forms, also of the commercial type, in which there may be present surface coatings comprising mixtures of one or more oxides selected from $SiO_2$, $Al_2O_3$, $TiO_2$; furthermore there may be used physical (mechanical) mixtures of $TiO_2$ with $SiO_2$ and/or $Al_2O_3$, as well as $SiO_2$ and/or $Al_2O_3$, such substrates or supports being finely particled. The mixed substrates of $TiO_2$, $SiO_2$, and/or $Al_2O_3$ obtained by precipitation of $SiO_2$ and/or $Al_2O_3$, also as alumino-silicates, onto crystalline $TiO_2$ particles, according to conventional methods, are preferable owing to their superior characteristics.

In relation to the desired uses, hiding degree or power or tinting strength to be obtained, the above-mentioned substrates or supports can be utilized also in admixtures with one another.

The specific surface area of such substrates or supports can vary over a wide range, from 5 to 500 $m^2/g$, preferably from 10 to 200 $m^2/g$.

Composite pigments containing from 10 to 50% by weight of silane perylene dye of formula (I) in grafted form are particularly preferred owing to their superior characteristics.

According to a yet further aspect of the invention, a process for preparing the composite pigments comprising the silane perylene dyes (I) grafted on the inorganic substrates or supports comprises reacting the selected substrate or support with the silane dye (I), in a reaction medium comprising water and/or an inert organic solvent, at a temperature from 20°C to the reflux temperature of the reaction medium, and separating the resulting product by filtration, and washing and drying it.

Such treatment can be advantageously carried out by grinding the silane dye with the substrate or support in the reaction medium. Such treatment lasts from 2 to 12 hours, depending on the reaction temperature employed.

Particularly advantageous results are obtained if the composite pigment is subjected to a dry heat treatment in an oven for 4-8 hours at 80°-140°C.

Suitable inert organic solvents are, for example, quinoline, dimethylformamide, N-methylpyrrolidone, dichloro- and trichloro-benzenes, dimethylsulphoxide and n-heptane.

The preparation process of the invention has proved particularly suitable for obtaining intensely coloured

pigments having a high tinting strength, even in the presence of inorganic substrates or supports having a low specific surface area, such as for example highly hiding $TiO_2$.

The composite pigments of the present invention may have a composition varying over a wide range, depending on the nature, particle size and specific surface area of the substrate particles and in relation to the tinting strength desired for the pigment.

Granulometric analysis of a composite pigment according to the invention indicates that the organic portion is essentially distributed on the surface of the inorganic substrate particles.

X-ray diffractometric analysis indicates that the composite pigment particles exhibit crystallinity which is characteristic of the substrate, while the grafted perylene coating is of an amorphous nature.

The perylene pigments of the present invention do not exhibit, due to their composite nature obtained by chemical bonds between the silane organic component and the inorganic component, the defects which are typical of the simple physical mixtures, wherefore they do not give rise to the phenomena of components demixing,

differentiated sedimentation, and crystallization, and they do not change their crystalline form when coming into contact with aromatic solvents, even under hot conditions.

Furthermore, solvent-based pigmentary compositions, such as those used for printing inks, do not cause sedimentation phenomena, not even after prolonged storing.

The abovesaid pigments, either in the highly hiding form or in the transparent form, exhibit excellent pigmentary characteristics, are insoluble in common organic and aqueous solvents, exhibit very good stabilities to migration in polyvinyl chloride (PVC), to overpainting in stove alkyd enamels and to acid or alkaline treatments. Such pigments possess a good photostability and a good tinting strength, and are stable to heat both when obtained in the transparent form and at increasing hiding degrees.

Thus they are most preferably utilized in painting products, for air and stove enamels, in the pigmentation of plastics materials such as PVC, polystyrene, polyethyleneterephthalate, etc., and in printing inks, according to conventional applicative techniques.

The mechanical and/or thermal treatments used in such conventional techniques do not substantially modify the pigmentary characteristics of the composite pigments of this invention.

The composite pigments exhibit the substantial advantage of being composed of an inorganic support or substrate, which is inexpensive and is capable of imparting excellent pigmentary characteristics, in particular the desired hiding or transparency degree and an excellent stability to solvents, onto which substrate a silane perylene dye, characterized by high photostability, tinting strength and shade purity, is grafted.

In general, both the silane perylene dyes according to the invention and the composite pigments according to the invention may be suitably used for colouring paints, air and stove enamels, printing inks and plastics materials.

The invention will be further described with reference to the following illustrative examples. In the examples, all parts and percentages, unless otherwise specified, are by weight.

Example 1

An autoclave, charged with 7.84 g of 3,4,9,10-perylenetetracarboxylic dianhydride, 10.4 g of γ-aminopropyl-triethoxysilane and 40 g of water, was heated to 200°C for 8 hours, under an autogenous pressure. The reaction mass was discharged and filtered at 60°-80°C, washed at 50°-60°C with neutral water, alkaline water due to KOH at 1%, then again with water to neutrality and finally with methanol.

By drying, an intensely red-coloured powder was obtained, which, on analysis, gave the following results: C = 57%; H = 42%; N = 4.3%; Si = 9%.

The powder, subjected to I.R. spectroscopic analysis, exhibiting the bands typical of silanol groups $\equiv$Si(OH) around 3500 $cm^{-1}$ and those of the imidic groups O=C-N-C=O at 1650 $cm^{-1}$ and 1695 $cm^{-1}$, while the bands typical of the anhydride group were absent.

To the abovesaid analytical and spectroscopic data essentially corresponds a dye of formula:

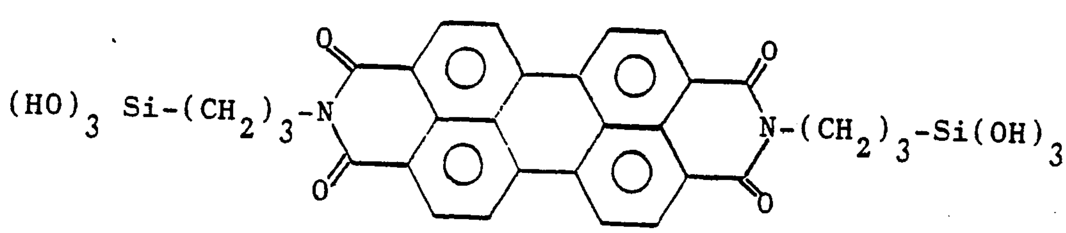

Such dye can be partially present also in oligomeric form

by formation of siloxane bonds

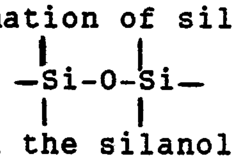

between the silanol functionalities $-Si(OH)_3$ present in the molecule.

<u>Example 2</u>

A closed reactor, charged with 7.84 g of 3,4,9,10-perylenetetracarboxylic dianhydride, 5.23 g of γ-aminopropyl-triethoxysilane and 50 g of water, was heated to 200°C for 8 hours.

After cooling to room temperature, 1.42 g of propylamine were added thereto, and the reactor was heated again to 180°C for 8 hours.

After cooling to a temperature of 60°-80°C, the product was discharged, filtered and washed as in Example 1.

By drying, an intensely dark-red coloured powder was obtained which, on analysis, gave the following results: C = 65%; H = 4.5%; N = 5%; Si = 6%.

From analytical and I.R. spectroscopic data, which revealed the absence of bands typical of the anhydride group, and the presence of $\geqslant$ SiOH and imide bands, the powder substantially corresponded to a dye of formula:

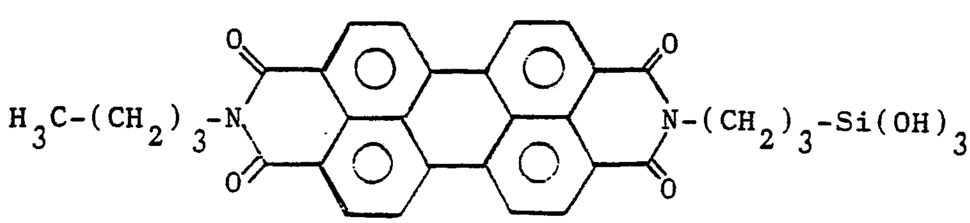

The dye can be partially present in the oligomeric form.

Example 3

A closed reactor, under a nitrogen atmosphere, charged with 3.92 g of 3,4,9,10-perylenetetracarboxylic dianhydride, 4.98 g of γ-aminopropyl-triethoxysilane and 50 g of water, was heated to 180°C for 10 hours.
After cooling to room temperature, 5.11 g of aniline and 0.5 g of zinc chloride were added, and the reactor was heated again to 220°C for 12 hours.
After cooling the product was filtered, hot washed with water acid due to HCl, then alkaline due to KOH (1%) and lastly neutral, then with a mixture of water and dimethylformamide at 50%, then with methanol, and finally dried.
An intensely red-coloured powder was obtained which, on analysis, gave the following results:
C = 67%; H = 4%; N = 4.5%; Si = 4.9%.
From analytical and I.R. spectroscopic data, the powder was found to essentially correspond to a dye of formula:

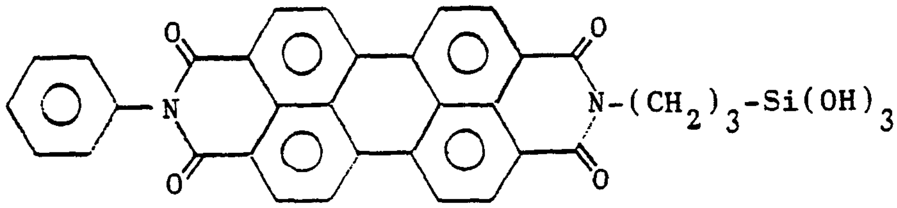

The dye can be partially present in the oligomeric form.

Example 4

An autoclave charged, under a nitrogen atmosphere, with 1.805 parts of 3,5-xylidine, as an aqueous solution of the corresponding hydrochloride, 3.92 parts of 3,4,9,10-perylenetetracarboxylic dianhydride, 50 parts of water and 0.5 parts of $ZnCl_2$, was heated to 220°C for 12 hours. The resulting product was filtered, hot washed with water, methanol and dried, then it was reacted again in the autoclave, under an autogenous pressure, with 3.297 parts of γ-aminopropyl-triethoxysilane, in 50 parts of water, while heating at 220°C for 122 hours.

The resulting product, separated and dried in like manner as in example 1, was an intense red powder which, on analysis, gave the following results:

C = 67.5%; H = 4.5%; N = 4%; Si = 5.5%.

From analytical data and from I.R. spectroscopic analysis, the powder was found to essentially correspond to a dye of formula:

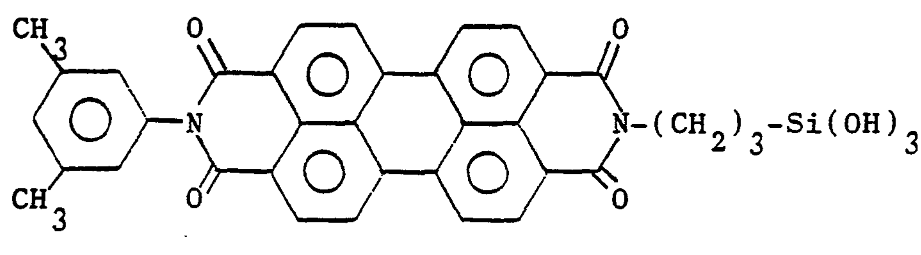

The dye can be partially present in the oligomeric form. Such dye was also obtained according to a variant of the abovesaid procedure, i.e. by first carrying out the

reaction between the dianhydride and the γ-aminopropyl-triethoxysilane and successively the reaction with 3,5-xylidine in the form of hydrochloride.

Example 5

By reacting 3.92 parts of 3,4,9,10-perylenetetracarboxylic dianhydride with 4.98 parts of γ-aminopropyl-triethoxysilane, in a first step, and successively with 3.69 parts of para-anisidine in the form of hydrochloride, in water, in a manner similar to that described in example 4, a red product was obtained which, on analysis, gave the following results:

C = 65%; H = 4%; N = 4%; Si = 5%.

From analytical data and from I.R. spectroscopic analysis, the product was found to essentially correspond to a dye of formula:

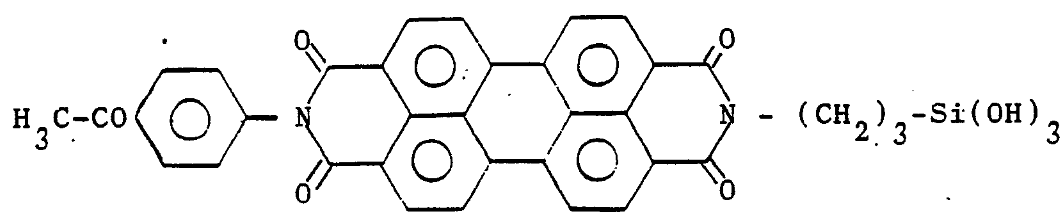

The dye can be partially present in the oligomeric form.

Example 6

A silane perylene composite pigment was prepared by using a mixed inorganic substrate of $TiO_2$, $SiO_2$ and

$Al_2O_3$, prepared as follows: 100 parts of $TiO_2$ were dispersed, under mechanical stirring, in 1 liter of water, and the resulting dispersion was then heated to 60°C. After a 15-minute stirring, 210 ml of a sodium silicate solution (titre: 365.47 parts/l of $SiO_2$) were added, and successively there were added, in 3 hours, 200 ml of an aluminium sulphate solution (titre: 60 parts/l of $Al_2O_3$). The addition was stopped when the pH of the slurry reached a value of 6. The slurry was stirred for 1 hour, whereafter the product was filtered, washed with water in order to remove the soluble salts, and finally dried at a temperature of 70°C. The dry product was crushed and then ground in an automatic mortar. A white powder (A) was obtained, having the following composition: $TiO_2$=43.4%; $SiO_2$=35.1%; $Al_2O_3$=7.15%; $H_2O$=14.35%, and having a specific surface area, determined by a Sorptometer, of 120 $m^2$/g, an actual specific gravity of 2.74 g/ml, an apparent specific gravity of 0.69 g/cc, a percentage porosity of 7.45 and a total porosity of 1.06 ml/g.

2 parts of the substrate so obtained and 1 part of the dye obtained in example 1 were ground during 12 hours in wet conditions in xylene, then heated to 140°C for 4 hours and filtered at room temperature.

The resulting product was then placed into an oven at

110°C and left there overnight, whereafter it was hot washed with xylene-dimethylformamide at 50%, methanol, and then dried.

An intense red powder was obtained which, on elemental analysis, was found to consist of 68% of inorganic components.

This powder proved to be particularly stable to treatment, even under hot conditions, with organic solvents or with water. In applications in stove alkyd enamels and in polyvinylchloride, it provided highly hiding red products having an excellent tinting strength, and stabilities to overpainting, to migration and to light, when present both in mass and diluted with $TiO_2$.

The powdered composite pigment was found, on X-ray diffractometric analysis, under CuKα 1.5418 radiation, to consist of particles having the crystallinity typical of $TiO_2$ rutile, while the $SiO_2$, $Al_2O_3$ and the silane perylene coating proved to be amorphous.

Example 7

One part of the dye obtained according to example 1 was introduced into a reactor along with 70 parts of water, 1 part of $TiO_2$ and 2.1 ml of a sodium silicate solution ($SiO_2$ titre: 365.47 parts/liter).

The suspension was heated to 60°C and, under stirring, it

was additioned, in 3 hours, with 2 ml of an aluminium sulphate solution ($Al_2O_3$ titre: 60 parts/liter), maintained at 60°C for 1 hour and then cooled down to room temperature.

After filtration, the resulting cake was washed with water to neutral pH, dried in an oven at 110°C overnight, then repeatedly washed with hot water and finally dried.

An intensely red-coloured powder was obtained which, on elemental analysis, was found to consist of 67.5% of inorganic components. The product exhibited applicative characteristics of stability, hiding power, and tinting strength as well as diffractometric characteristics similar to those of the product obtained according to example 6.

Example 8

1 part of the dye obtained in example 1 was introduced into a reactor with 70 parts of water and 4.2 ml of a sodium silicate solution ($SiO_2$ titre: 365.47 parts/l).

The suspension was heated to 60°C and, under stirring, it was additioned in 3 hours with 4 ml of an aluminium sulphate solution ($Al_2O_3$ titre: 60 parts/l), then was maintained at 60°C for 1 hour, whereupon it was cooled to ambient temperature.

After filtration, the resulting cake was washed with water to neutral pH, dried in an oven at 110°C overnight, then repeatedly washed with hot water and, finally, dried.

A red powder was obtained which, on analysis, was found to consist of 68.5% of inorganic components.
The composite pigment was found, on X-ray analysis, to consist of amorphous particles.
This powder, in applications in stove enamel and in polyvinyl chloride, provided red, fully transparent products, having excellent stability and photostability.

Examples 9-19

By operating according to the manners of examples 6, 7 and 8 and utilizing the silane perylene dyes of examples 1, 2 3, 4 and 5 in combination with the inorganic substrates indicated in Table 1, there were prepared 11 red pigments of different shades, with different hiding powers and transparency degrees and with stability characteristics similar to those of the products obtained in examples 6, 7 and 8.

Table 1

| EXAMPLE | DYE OF THE EXAMPLE | INORGANIC SUBSTRATE |
|---|---|---|
| 9 | 1 | $TiO_2$-$SiO_2$ |
| 10 | 1 | $TiO_2$-$Al_2O_3$ |
| 11 | 1 | $SiO_2$ |
| 12 | 1 | $Al_2O_3$ |
| 13 | 2 | $TiO_2$-$SiO_2$-$Al_2O_3$ |
| 14 | 2 | $SiO_2$ |
| 15 | 3 | $SiO_2$ |
| 16 | 3 | $TiO_2$-$SiO_2$ |
| 17 | 3 | $TiO_2$-$SiO_2$-$Al_2O_3$ |
| 18 | 4 | $TiO_2$-$SiO_2$-$Al_2O_3$ |
| 19 | 5 | $TiO_2$-$SiO_2$-$Al_2O_3$ |

Example 20 (Application in PVC)

In a rotary-arm mixer there were mixed, at 70°C:

1.0 part of the pigment obtained according to example 6 and previously ground,

100 parts of polyvinyl chloride (PVC) in powder form,

1.5 parts of calcium stearate for exerting a complexing and stabilizing action,

3.0 parts of epoxydized soybean oil,

0.5 parts of lubricant (a mixture of glycerides from $C_{16}$ to $C_{36}$),

2.0 parts of $TiO_2$.

The mixture so obtained was then treated at 180°C in a three cylinder refiner until there was obtained complete dispersion of the pigment in order to obtain a highly hiding red sheet having a good colour intensity, a good photostability, a good tinting strength, a good stability to heat and an excellent stability to migration.

Example 21 (Application in enamels)

5.0 parts of the pigment obtained according to example 6 were mixed by grinding with 95.0 parts of a fluid carrier having the following composition:

22% of alkyd resin,

19% of melamine resin,

59% of xylene.

Homogenization was carried out in a ball mill by grinding

the mixture in the presence of porcelain spheres of 10 mm diameter, during 24 hours.

The enamel so obtained was applied onto a surface to be painted, and was allowed to dry overnight, and then it was placed in an oven and left there for 30 minutes at 120°-125°C.

A red painting having excellent hiding power, stability to light and to overpainting and a good tinting strength was obtained.

In order to obtain a paint exhibiting a lighter shade and a higher hiding power, 1 part of the enamel obtained as described hereinbefore was further diluted with 9 parts of a white synthetic stove enamel (10% of $TiO_2$) having the following composition:

30% of alkyd resin,

27% of melamine resin,

33% of xylene,

10% of $TiO_2$.

Homogenization was carried out in a ball mill by grinding the mixture in the presence of porcelain spheres of 10 mm diameter, during 24 hours.

The cut enamel so obtained was applied onto the surface to be painted, was allowed to dry overnight, and then was placed in an oven and kept there at 120°-125°C for 30 minutes. A light red paint was obtained, which exhibited excellent general stabilities and a high hiding power.

Example 22 (Application in polystyrene)

0.04 g of the pigment obtained according to example 6 and previously ground were added to 100 g of polystyrene (EDISTIR NA, a Montedison registered trade-mark) previously dried and then calendered at 160°C for 5 minutes. The dyed material was cut and then crushed in a geared apparatus.

To evaluate the shade, tinting strength and thermostability, moldings were carried out in a CARVER press at 200°C and at 260°C.

A molded article exhibiting a hiding red shade and characterized by a good thermostability and a good photostability was thus obtained.

CLAIMS :

1. A perylene dye containing at least one silane group, characterized by having the formula :

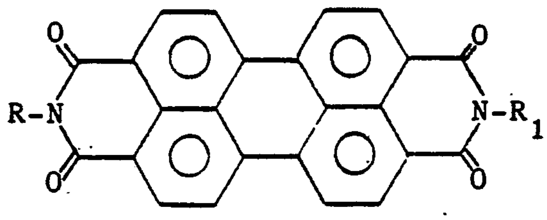

(I)

in which R is the residue of a silane group of formula:

$$-(CH_2)_n-\underset{(R_2)_q}{\underset{|}{Si}}-(R_3)_m(OH)_{p-m} \qquad \text{(II)}$$

wherein n is 3, 4 or 5; q is 0 or 1; p and m are integers such that when q is 0, p is 3 and m is 0, 1, 2 or 3, and when q is 1, p is 2 and m is 0, 1 or 2; $R_2$ is an alkyl group having up to 4 carbon atoms or a phenyl group; and $R_3$ is an alkoxyl group having up to 2 carbon atoms; and in which $R_1$ may be the same as or like R or may be an alkyl group having up to 6 carbon atoms, a cycloalkyl group, or a phenyl group optionally substituted by one or more halogens or alkyl or alkoxyl groups containing up to 6 carbon atoms.

2. A silane perylene dye as claimed in claim 1, characterized by having the formula:

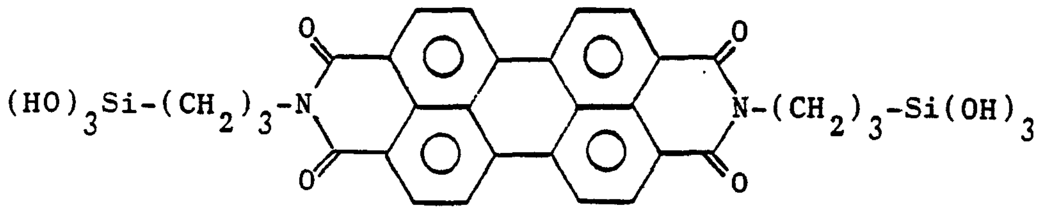

3. A silane perylene dye as claimed in claim 1, characterized by having the formula:

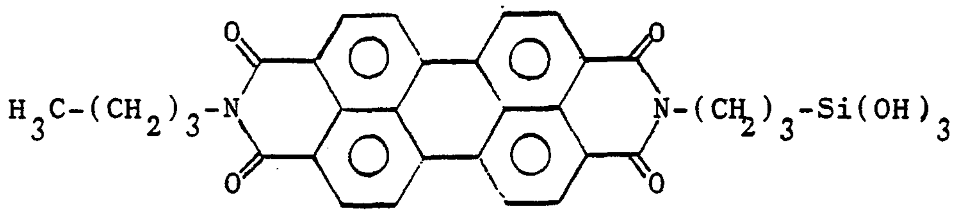

4. A silane perylene dye as claimed in claim 1, characterized by having the formula:

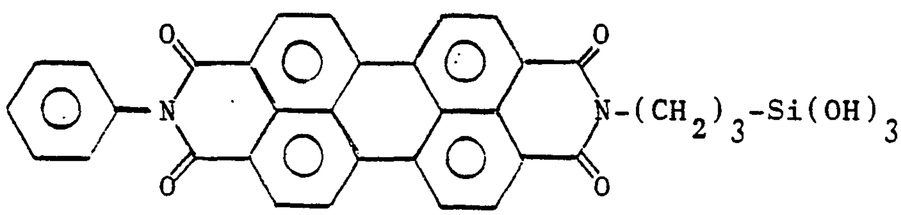

5. A silane perylene dye as claimed in claim 1, characterized by having the formula:

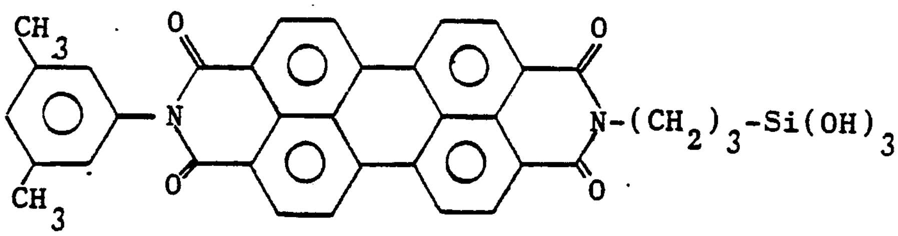

6. A silane perylene dye as claimed in claim 1, characterized by having the formula:

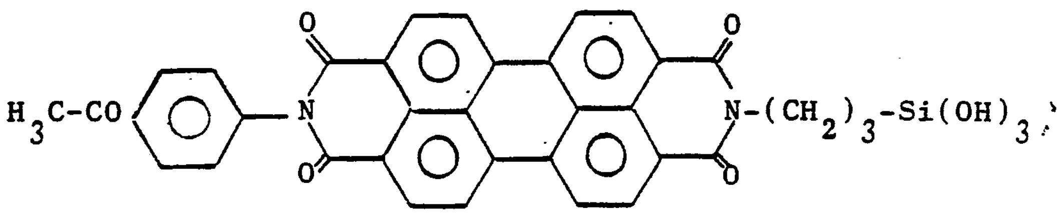

7. A process for preparing a perylene dye according to claim 1, characterized by comprising reacting a 3,4,9,10-perylenetetracarboxylic dianhydride of formula:

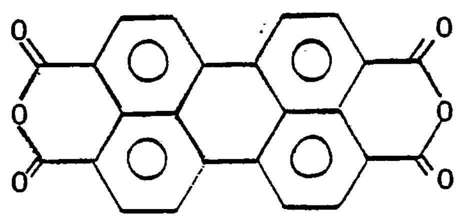

(III)

with a silane compound of formula:

$$H_2N-(CH_2)_n-\underset{\displaystyle (R_2)_q}{\underset{|}{Si}}-(R_3)_m(OH)_{p-m}$$

(IV)

where $R_2$, $R_3$, n, q, p and m are as defined in claim 1, and optionally with a compound of formula:

$$R_4\text{-}NH_2 \qquad (V)$$

in which $R_4$ is an alkyl group having up to 6 carbon atoms, a cycloalkyl group, or a phenyl group optionally substituted by one or more halogens or alkyl or alkoxyl groups, in a reaction medium comprising water and/or an organic solvent, at a temperature from 130° to 240°C, for 6 to 24 hours.

8. A process as claimed in claim 7, characterized in that the aminoalkoxysilane of formula (IV) is selected from γ-aminopropyl-triethoxysilane, δ-aminobutyl-phenyldiethoxysilane, γ-aminopropyl-methyl-diethoxysilane, and δ-aminobutyl-triethoxysilane.

9. A process as claimed in claim 7 or 8, characterized in that the amine of formula (V) is selected from: methylamine, ethylamine, propylamine, butylamine, pentylamine, hexylamine, sec.butylamine, tert.butylamine, isopropylamine, cyclohexylamine, morpholine, aniline, ortho-, meta-, para-toluidines, chloroanilines or anisidines, 2,4- or 3,5-xylidines, dianisidines or dichloroanilines, 2-methyl-4-chloroaniline, 2,5-dimethoxy-4-chloroaniline, and 2,4-dimethoxy-5-chloroaniline.

10. A process as claimed in any of claims 7 to 9, characterized in that the organic solvent is selected from dioxane, dimethylformamide, pyridine, quinoline, trichlorobenzene, alphachloronaphthalene and nitrobenzene.

11. A process as claimed in any of claims 7 to 10, characterized in that the reaction is conducted in a reaction medium comprising water or mixture thereof with an organic solvent, in a closed reactor, under an autogenous pressure, utilizing the compound of formula (V) in the form of hydrochloride.

12. A process as claimed in any of claims 7 to 11, characterized in that the reaction is carried out in the presence of a zinc salt in an amount of 1-50% by weight referred to the dianhydride of formula (III).

13. A process as claimed in claim 12, characterized in that the zinc salt is zinc chloride or zinc acetate.

14. A composite pigment, characterized by comprising a silane perylene dye as claimed in any of claims 1 to 6, grafted onto a solid inorganic substrate or support.

15. A composite pigment as claimed in claim 14, characterized in that the inorganic substrate or support is selected from $TiO_2$ gel, semicrystalline $TiO_2$, rutile $TiO_2$ and anatase $TiO_2$; mixtures of $TiO_2$ with $SiO_2$ and/or $Al_2O_3$; $SiO_2$ and/or $Al_2O_3$; and mixtures thereof: the said substrate or support being finely particled and having a specific surface area of from 5 to 500 $m^2/g$.

16. A composite pigment as claimed in claim 14 or 15, characterized by containing from 10 to 50% by weight of the silane perylene dye in grafted form.

17. A process for preparing a composite pigment according to claim 14, characterized by comprising reacting the inorganic substrate or support with a silane perylene dye of formula (I) in a reaction medium comprising water and/or an inert organic solvent, at a temperature from 20°C to the reflux temperature of the reaction medium, and separating and drying the obtained pigment.

18. A process as claimed in claim 17, characterized in that the reaction is carried out by grinding the silane dye with the substrate or support in the presence of the reaction medium, during 2 to 12 hours.

19. A process as claimed in claim 17 or 18, characterized in that the composite pigment obtained is subjected to a dry thermal treatment in an oven for 4-8 hours at 80°-140°C.

20. A paint, air enamel, stove enamel, printing ink or plastics material, when coloured with a silane perylene dye as claimed in any of claims 1 to 6.

21. A paint, air enamel, stove enamel, printing ink or plastics material, when coloured with a composite pigment as claimed in any of claims 14 to 16.